# EUROPEAN PATENT SPECIFICATION

(11) **EP 3 279 106 B1**
(45) Date of publication and mention of the grant of the patent: **13.02.2019**
(21) Application number: 17183503.6
(22) Date of filing: 27.07.2017
(51) Int. Cl.: B65D 21/02, B65D 71/52, B62B 1/04, B62B 5/00

(54) **DEVICE WITH PLATFORM FOR CADDY ASSEMBLIES**
VORRICHTUNG MIT PLATFORM FÜR CADDY-ANORDNUNGEN
DISPOSITIF AVEC PLATE-FORME POUR ENSEMBLES CHARIOT

(30) Priority: 01.08.2016 US 201662369661 P
(43) Date of publication of application: 07.02.2018
(73) Proprietor: Deflecto, LLC, Indianapolis, IN 46250 (US)
(72) Inventor: Foley, Patrick, Fishers, IN 46037 (US); Rodgers, Danielle, Indianapolis, IN 46260 (US); Wang, Robin, Foshan City, Guangdong 528300 (CN); Stuart, Christopher, Noblesville, IN 46060 (US); DeChant, James, Carmel, IN 46033 (US); Bennet, Cyril, Indianapolis, IN 76208 (US)
(74) Representative: Heaton, Joanne Marie

(56) References cited:
- US-A- 5 415 277
- US-A1- 2010 059 951
- US-A1- 2016 130 034

## Description

### TECHNICAL FIELD

The present invention relates generally to a customizable caddy assembly that includes a platform and a storage base configured to receive interchangeable storage receptacles and more specifically to a device according to the preamble of claim 1. One or more individual container systems can be combined to create a larger organizational unit. A device according to the preamble of claim 1 is known from US 2016/130034 A1.

### BACKGROUND

Storing and transporting items such as office or craft supply items can be difficult with current storage systems. This is because known storage solutions do not offer the flexibility to interchange storage receptacles or easily stack and transport more than one storage solution.

### SUMMARY

The invention provides a device according to claim 1.

Disclosed herein are storage systems including a platform supporting one or more storage bases. The assembly includes a platform having a platform base with a top side and a bottom side; and a plurality of detachable wheels adapted to fit into a plurality of slots on the bottom side of the platform base. The top side of the platform base is capable of receiving a storage base containing a frame including (i) a first horizontal side wall facing a second horizontal side wall, (ii) a first horizontal end wall facing a second horizontal end wall, the first and second horizontal end walls extending transversely between the first and second horizontal side walls, a partition extending transversely between the horizontal end walls to divide the frame into first and second compartments. The first and second compartments including (a) a planar bottom, (b) a first vertical side wall extending up from the planar bottom and terminating at a top edge, the top edge coupled to the first horizontal end wall, (c) a second vertical side wall facing the first vertical side wall extending up from the planar bottom and terminating at a top edge, the top edge coupled to the second horizontal end wall and a cavity formed within the planar bottom and vertical side walls of each compartment, each cavity at least having an open top bounded by the top edges of the horizontal end walls, the partition and one of the horizontal side walls. Further, the partition wall includes an upper portion extending above the level of the frame to form a handle, and the handle further includes (x) first handle portion pivotally attached to a first end of the handle, (y) a second handle portion pivotally attached to a second end of the handle, and (z) a groove configured to receive the handle portions therein.

In another embodiment of the disclosure, the horizontal end walls include an opening, and each handle portion has a projecting edge configured to mate with the opening within the horizontal end walls.

In another embodiment of the disclosure, the container system includes a first and second storage base, where the handle portions of the first storage base are mated with the corresponding opening within the horizontal end walls of the second storage base so as to removably connect the first storage base to the second storage base and create a storage unit.

In another embodiment of the disclosure, the horizontal side walls, horizontal end walls, partition, planar bottom and vertical end walls being integral to form a one piece, rigid base.

In another embodiment of the disclosure, the container system includes a removable receptacle configured to be received within at least a portion of the cavities, the receptacle comprising (a) a planar bottom with side walls coupled to the outward peripheral edges of the planar bottom to form a rectangular shape, and (b) a cap in substantially the same shape as the planar bottom configured to be received by the top edges of the side walls to create an enclosed receptacle.

In another embodiment of the disclosure, the container system includes a plurality of removable receptacles.

In another embodiment of the disclosure, the container system includes differently sized removable receptacles.

In another embodiment of the disclosure, planar bottoms include a receptacle connection structure comprising at least one raised portion on the upper surface of the planar bottom configured to mate with a recessed portion on the lower surface of the receptacle planar bottom, such that the receptacle removably connects to the planar bottom. A person of ordinary skill in the art would understand that this arrangement could be inverted to achieve the same result.

In another embodiment of the disclosure each planar bottom includes three receptacle connection structures evenly spaced across the planar bottom.

In another embodiment of the disclosure the cap includes a planar bottom connection structure comprising at least one recessed portion on the upper surface of the cap configured to mate with a raised portion on the lower surface of the planar bottom, such that the cap removably connects to the planar bottom. A person of ordinary skill in the art would understand that this arrangement could be inverted to achieve the same result.

In another embodiment of the disclosure each cap includes two planar bottom connection structures evenly spaced across the upper surface of the cap.

In another embodiment of the disclosure each cap includes three planar bottom connection structures evenly spaced across the upper surface of the cap.

In another embodiment of the disclosure the container system includes a first and second storage base, wherein the handle portions of the first storage base are mated with the corresponding opening within the horizontal end walls of the second storage base so as to removably connect the first storage base to the second storage base and the cap of the receptacle within the lower storage base is mated with the lower surface of the planar bottom of the second storage unit, such that first and second storage bases form a storage unit.

In another embodiment of the disclosure the first compartment and second compartment are formed so as to receive a handle of a second storage base when the second storage base is mated with the first storage base.

In another embodiment of the disclosure there is a customizable caddy assembly system. They system includes a platform base with a top side and a bottom side; and a plurality of detachable wheels adapted to fit into a plurality of slots on the bottom side of the platform base. The top side of the platform base is capable of receiving a storage base. The storage base includes (a) a frame including (i) a first horizontal side wall facing a second horizontal side wall, (ii) a first horizontal end wall facing a second horizontal end wall, the first and second horizontal end walls extending transversely between the first and second horizontal side walls (b) a partition extending transversely between the horizontal end walls to divide the frame into first and second compartments, (c) each of the first and second compartments including (i) a planar bottom, (ii) a first vertical side wall extending up from the planar bottom and terminating at a top edge, the top edge coupled to the first horizontal end wall, (iii) a second vertical side wall facing the first vertical side wall extending up from the planar bottom and terminating at a top edge, the top edge coupled to the second horizontal end wall, and (d) a cavity formed within the planar bottom and vertical side walls of each compartment, each cavity at least having an open top bounded by the top edges of the horizontal end walls, the partition and one of the horizontal side walls and a removable receptacle configured to be received within at least a portion of the cavities. The receptacle includes (x) a planar bottom with side walls coupled to the outward peripheral edges of the planar bottom to form a rectangular shape, and (y) a cap in substantially the same shape as the planar bottom configured to be received by the top edges of the side walls to create an enclosed receptacle. Further, the partition wall of the storage base includes an upper portion extending above the level of the frame to form a handle, and the handle further includes (a) first handle portion pivotally attached to a first end of the handle, (b) a second handle portion pivotally attached to a second end of the handle, and (c) a groove configured to receive the handle portions therein.

The customizable caddy assembly system can be used with or without the platform.

Numerous other aspects, features and benefits of the present disclosure may be made apparent from the following detailed description taken together with the drawing figures.

### BRIEF DESCRIPTION OF DRAWINGS

The accompanying drawings, which are incorporated in and constitute a part of this specification, illustrate an implementation of the present disclosure and, together with the description, serve to explain the advantages and principles of the disclosure. In the drawings:
**FIG. 1** depicts an exploded view of a carrying base and storage receptacles according to an embodiment of the disclosure.
**FIG. 2** depicts a view of a carrying base and storage receptacles according to an embodiment of the disclosure.
**FIG. 3** depicts an exploded view of the organizational unit according to an embodiment of the disclosure.
**FIG. 4** depicts the organizational unit according to an embodiment of the disclosure.
**FIG 5** depicts an exploded view of the organizational unit according to an embodiment of the disclosure.
**FIGS. 6A-6C** depict a view of the storage receptacles and lid according to an embodiment of the disclosure.
**FIG. 7** depicts a view of the storage receptacle and lid according to an embodiment of the disclosure.
**FIG. 8** is a perspective view of a device according to the invention comprising a platform and supporting a carrying base and storage receptacles according to an embodiment of the disclosure.
**FIG. 9** is a perspective view of a platform according to an embodiment of the disclosure.
**FIG. 10** is a bottom view of a platform according to an embodiment of the disclosure.

### DETAILED DESCRIPTION

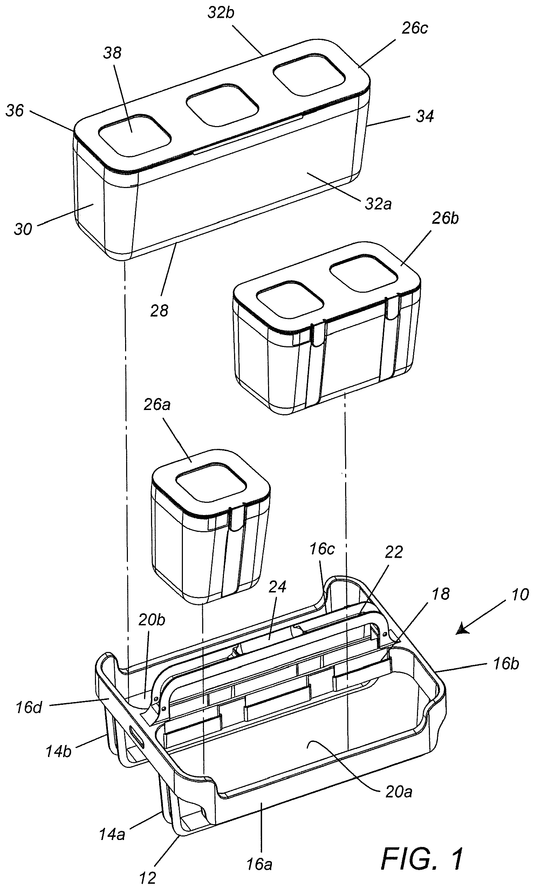

As shown in **FIG. 1** the container system includes a storage base portion **10.** The base portion includes a planar bottom **12.** The storage base portion includes a first end and a second end, each of which are coupled to a vertical side wall **14a** and **14b.** The vertical side wall **14** is coupled to horizontal side walls **16a, 16b, 16c** and **16d,** which define the internal space of the storage base portion **10.** The storage base portion can assume various shapes known to persons of ordinary skill in the art by varying the length or other dimensions of the horizontal and vertical side walls, but is preferably square or rectangular in shape.

Further, as shown in **FIG. 1****,** an interior horizontal sidewall **18** or sidewalls may be used to separate or divide the interior of the storage base portion into one or more cavities **20.** In the embodiment shown in **FIG. 1****,** the storage base portion is divided into two cavities **20a** and **20b.** Each cavity is defined by a planar bottom **12,** vertical side walls **14** and an horizontal interior side wall **16.** The planar bottom **12,** vertical side walls **14** and horizontal side walls **16** and **18** can vary in dimension so as to create a more open base portion as shown or closed cavity. In other embodiments, the cavities can further be defined into smaller cavities by employing additional interiors side walls within the cavity.

A handle **22** extends from a first horizontal side wall to second horizontal side wall opposite to or facing the first horizontal sidewall. The handle is provided to allow the container system to be moved to another location by grasping a portion of the bar **24.** As discussed in more detail later on, the handle portion **44** also serves to connect one container system to another.

The container system also includes one or more receptacles **26** of the same or varying sizes like those shown in **26a, 26b** and **26c.** The receptacles can be inserted within the storage base portion to transport the receptacles or store the receptacles. The receptacles can also be removed to access items within the receptacle or interchange them with a different receptacle. Each receptacle includes a planar bottom **28** with walls coupled to outward peripheral edges of the planar bottom **28.** Specifically, the receptacle may include a first side wall **32a** that is coupled to one side edge of the planar bottom **28** and a second side wall **32b** is coupled to the opposite side edge of the planar bottom. Between the sidewalls is a frontwall **30** that is coupled to a front edge of the planar bottom and a backwall **34** coupled to the opposite back edge of the planar bottom. The sidewalls, planar bottom and front and back walls combine to form a receptacle with an internal storage cavity.

Included with the receptacle **26** is a cap **36** which can be attached to an upper edge of a side wall, front wall or back wall to create an enclosed receptacle. For example, the cap can be provided with one or more hinge supports equally spaced along a peripheral edge of the cap which is joined to either a side wall, front wall or back wall. In the embodiment, the cap can open by pivoting about the hinge and close by pivoting about the hinge in an opposite direction. The cap can also snap into place on top of the receptacle. Other mechanisms of attaching the cap to the receptacle well known to those of ordinary skill in the art can also be employed. Further, the upper surface of the cap **36** may include one or more recesses **38** which have a peripheral profile that corresponds to all or a portion of the planar bottom **12** of the storage base portion **10,** the planar bottom **28** of a different receptacle, or both such that when one or more organization units are vertically stacked, the planar bottom **12** of the storage base portion **10,** the planar bottom **28** of a different receptacle, or both nest with in all or a portion of the cap recess.

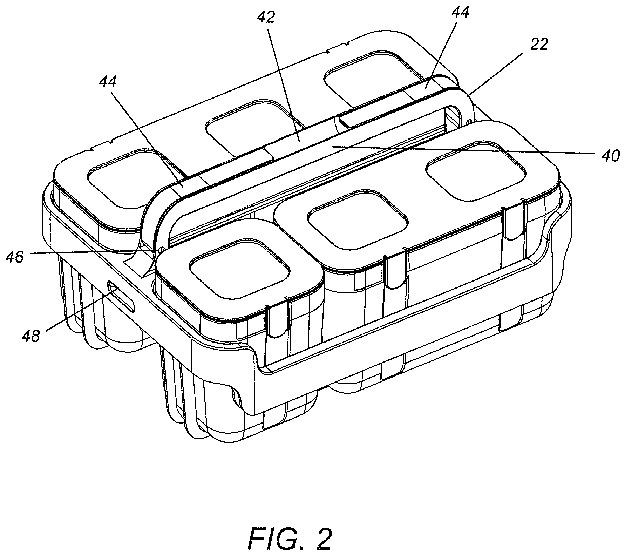

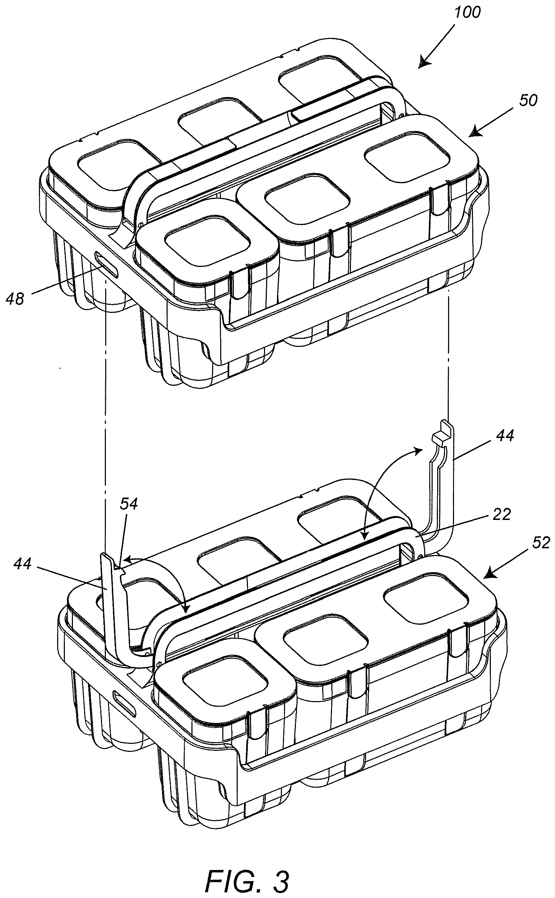

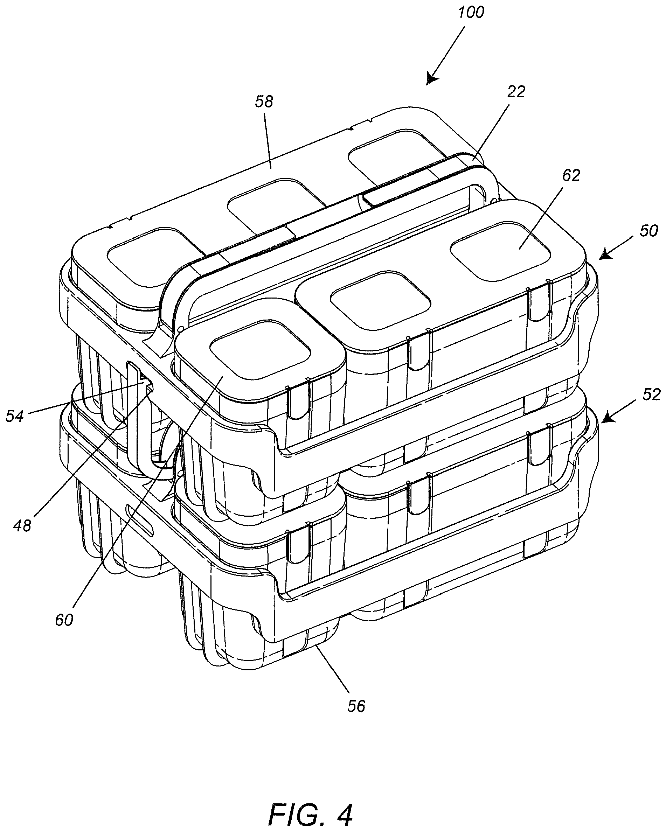

**FIG. 2** is shows a more detailed view of the handle **22.** The handle **22** may include a pair of handle side walls **40** facing each other forming a groove or open cavity **42** which can receive handle portion **44** that pivots about a fixed point **46** to a 90 degree or substantially 90 degree angle with respect to the handle **22.** The handle portion **44** and the groove **42** are configured such that the upper surface of handle portion **44** is flush with the upper edges of the groove **42** when the handle portion is received within the groove. **FIG. 2** also shows an opening **48** in horizontal side wall, which is adapted to receive the upper part of the handle portion as shown in **FIGS. 3** and **4****.**

**FIGS. 3** and **4** show an embodiment of the disclosure where two or more container systems may be connected to each other to create an organization unit **100.** Specifically, **FIG. 3** shows an upper container system **50** disconnected from a lower container system **52** which allows a user to create a smaller organizational unit or to access receptacles within a lower container system **52.**

In this embodiment, the handle portions **44** are extended outwardly from the handle **22** at about 90 degrees. Each handle portion has a projecting edge **54** which can be mated with the opening **48** within the horizontal side wall of the upper container system **50.** When the projecting edges **54** are mated with a corresponding opening **48** of the upper container system, the container systems are securely connected and transportable using the handle of the upper container system 22 while the planar bottom **56** of the lower container system **52** serves as the storage base of the entire organizational unit. A person of ordinary skill in the art would understand that the organizational unit is not limited to only two container systems mated together and that two or more container systems can be mated together in order to create a large organizational unit. In this case, the handle **22** of the upper most container system permits a user to easily transport or carry the entire organizational unit while the planar bottom of the lower most container system serves as the storage base for the entire organizational unit.

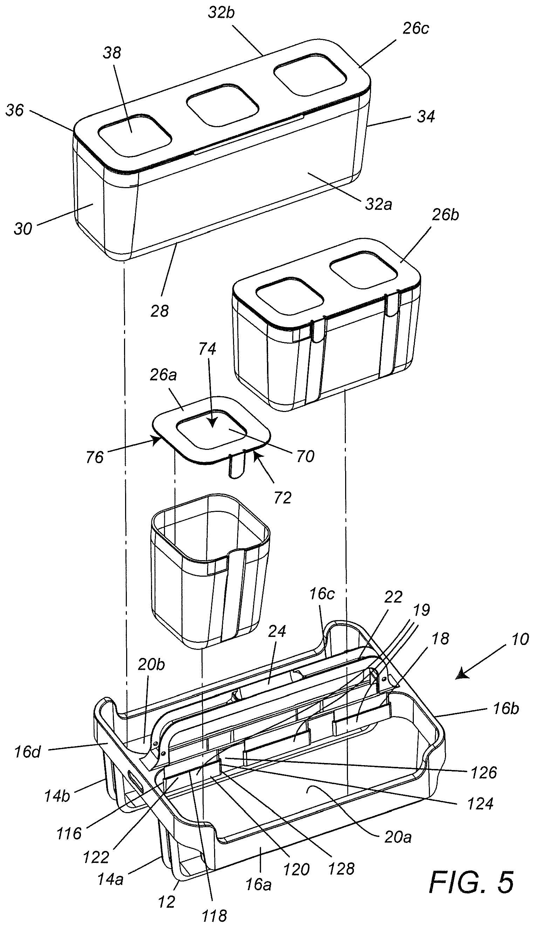

As shown in **FIG. 5** the container system includes a base portion **10.** The base portion includes a planar bottom **12.** The base portion includes a first end and a second end, each of which are coupled to a vertical side wall **14a** and **14b.** The vertical side wall **14** is coupled to horizontal side walls **16a, 16b, 16c and 16d,** which define the internal space of the storage base portion **10.** The base portion can assume various shapes known to persons of ordinary skill in the art by varying the length or other dimensions of the horizontal and vertical side walls, but is preferably square or rectangular in shape.

Further, as shown in **FIG. 5****,** an interior horizontal sidewall **18** or sidewalls may be used to separate or divide the interior of the storage base portion into one or more cavities **20.** In the embodiment shown in **FIG. 1****,** the storage base portion is divided into two cavities **20a** and **20b.** Each cavity is defined by a planar bottom **12,** vertical side walls **14** and an horizontal interior side wall **16.** The planar bottom **12,** vertical side walls **14** and horizontal side walls **16** and **18** can vary in dimension so as to create a more open base portion as shown or closed cavity. In other embodiments, the cavities can further be defined into smaller cavities by employing additional interiors side walls within the cavity.

A handle **22** extends from a first horizontal side wall to second horizontal side wall opposite to or facing the first horizontal sidewall. The handle is provided to allow the container system to be moved to another location by grasping a portion of the bar **24.** As discussed in more detail later on, the handle portion **44** also serves to connect one container system to another.

The container system also includes one or more receptacles **26** of the same or varying sizes like those shown in **26a, 26b** and **26c.** The receptacles can be inserted within the storage base portion to transport the receptacles or store the receptacles. The receptacles can also be removed to access items within the receptacle or interchange them with a different receptacle. Each receptacle includes a planar bottom **28** with walls coupled to outward peripheral edges of the planar bottom **28.** Specifically, the receptacle may include a first side wall **32a** that is coupled to one side edge of the planar bottom **28** and a second side wall **32b** is coupled to the opposite side edge of the planar bottom. Between the sidewalls is a frontwall **30** that is coupled to a front edge of the planar bottom and a backwall **34** coupled to the opposite back edge of the planar bottom. The sidewalls, planar bottom and front and back walls combine to form a receptacle with an internal storage cavity.

Included with the receptacle **26** is a cap **36** which can be attached to an upper edge of a side wall, front wall or back wall to create an enclosed receptacle. In an embodiment, the cap **36** is configured to cover and seal the opening of the receptacle **26.** The cap **36** includes a panel **70** with an upper surface **74** and a lower surface **72.** An edge circumvents **76** the perimeter of the panel. In an embodiment, the edge **76** has an inner wall that extends perpendicularly or substantially perpendicular downward from the plane of the panel. The inner wall is coupled to an upper wall of the edge which extends horizontally and is coupled to an outer wall that extends vertically downward from the upper wall. The outer wall is spaced apart from the inner wall to form a channel (not shown). In an example, the cap fits over the receptacle so that the top edge of the receptacle is received within the channel of the lid. In this example, the cap covers the opening of the receptacle create a closed cavity. Further to this example, the cap can easily be removed to access the cavity within the receptacle. Other mechanisms of attaching the cap to the receptacle well known to those of ordinary skill in the art can also be employed. Further, the upper surface of the cap **36** may include one or more recesses **38** which have a peripheral profile that corresponds to all or a portion of the planar bottom **12** of the storage base portion **10,** the planar bottom **28** of a different receptacle, or both such that when one or more organization units are vertically stacked, the planar bottom **12** of the storage base portion **10,** the planar bottom **28** of a different receptacle, or both nest with in all or a portion of the cap recess.

Further, a person of ordinary skill in the art would understand that a kit could be created using various combinations of the components described above. For example a kit could include a base portion with three different sized receptacles **58, 60** and **62** that fit within the storage base unit cavities. Separate base units could be provided such that the combination of receptacles could vary. For example, three smaller receptacles may be placed within one cavity of the storage base portion, or each base portion could include only one receptacle that extends the entire length and width of the cavity, **62.**

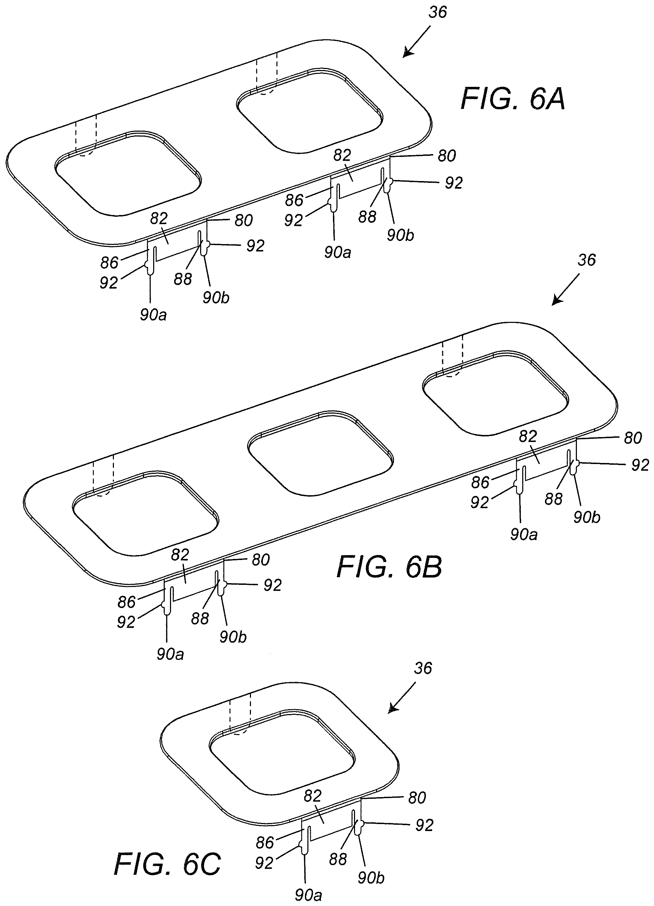

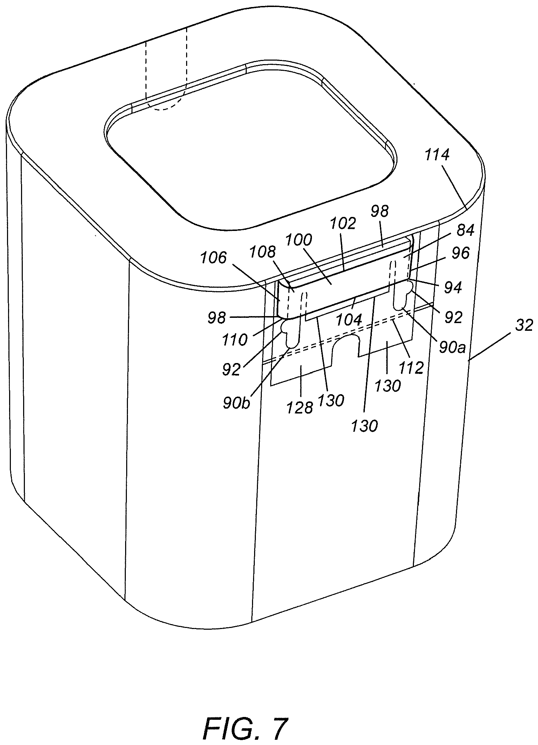

Another embodiment of the cap **36** is shown in **FIGS. 6A-6C****.** In this embodiment, the cap **36** is removably attached to an upper edge of a side wall, front wall or back wall of the receptacle to create an enclosed receptacle. In this embodiment, the cap can be provided with one or more hinge supports **80** equally spaced along a peripheral edge of the cap. In an example the hinge includes a flap **82** configured to be received by a slot **84** (show in **FIG. 7**) on a sidewall **32** of the receptacle. In an embodiment, the flap **82** includes a first tab **86** opposed to a second tab **88** each of which extend outwardly and downwardly from the flap **82.** The position of each tab relative to the slot **84** is configured to provide sufficient clearance to span the width of the slot **86** and in operation allow the tabs **86** and **88** to be squeezed inwards, e.g. towards the center of the flap **82** to engage the flap **82** with the slot **84.** In operation, the tabs **86** and **88** can be squeezed inwards, e.g. towards the center of the flap **82** to disengage the flap **82** from the slot **84.**

In an embodiment, the flap **82** and tabs **86** and **88** are integrally formed, e.g. by injection molding. The material composition and dimensions of the tabs **86** and **88** are configured that in operation, a user can laterally displace the tabs with respect to the flap **82** with moderate force and to allow the tabs **86** and **88** to return back to their original position when then force has been released. In an example the flap and tabs are composed of a resilient material such as a plastic or resilient metal.

In an embodiment, each tab **86** and **88** has an end portion **90** that extends downwardly from each tab. In operation, as shown in **FIG. 7****,** when each tab **86** and **88** is received within the slot **84,** the end portion **90** extends past the lower edge **94** of the slot **84.** In an embodiment, each tab **86** and **88** include a protrusion **92** that extends outwardly and horizontally from a peripheral edge of the tab. The position of each tab **86** and **88** and its respective protrusion **92** relative to the slot **84** are configured to provide sufficient clearance to span the width of the slot **86** and in operation allow the tabs **86** and **88** to be squeezed inwards, e.g. towards the center of the flap **82** to engage the flap **82** with the slot **84.**

In an example, the material composition and dimensions of the tabs **86** and **88** are configured such that in operation, a user can laterally displace the tabs with respect to the flap **82** with moderate force and to allow the tabs **86** and **88** to return back to their original position when the force has been released. In this embodiment, each protrusion clears the lower edge **94** of the slot **84** when the tabs are squeezed inwards and when the force on the tabs is released, the tabs return to their original position such that the lower edge **94** of the slot rests on an upper edge **98** of the protrusions. In an example, the protrusion provides a locking mechanism that secures the flap and its respective tabs within the slot. In operation, when the flap and tabs are received within the slot **84,** the protrusions prevent upward motion of the flap **82** and tabs **86** and **88.** Further to this example, in operation, the tabs **86** and **88** can be squeezed inwards, e.g. towards the center of the flap **82** such that the tabs and protrusions are laterally displaced a dimension to have sufficient clearance of the slot to disengage the flap **82** from the slot **84.**

In operation, the tabs **86** and **88** can be squeezed inwards, e.g. towards the center of the flap **82** to disengage the flap **82** from the slot **84.**

As shown in **FIG. 7****,** the receptacle can include one or more slots evenly spaced across the sidewall **32.** In an embodiment, the slot **84** configured to receive the flap **82.** The slot **84** includes a first slot end wall **96** extending outwardly and horizontally away from the receptacle sidewall **32** and terminating at an upper edge **98** and a lower edge **94.** An edge of the first slot end wall **96** is coupled to a horizontal side wall **100,** which faces the receptacle side wall **32** and extends horizontally across the sidewall **32** and terminates at an upper edge **102** and lower edge **104.** The slot sidewall coupled to a second slot end wall **106** extending outwardly and horizontally away from the receptacle sidewall **32** and terminating at an upper edge **108** and a lower edge **110.** A slot or opening formed within the slot end walls and horizontal side walls has an open top bounded by the top edges of the horizontal side walls and slot end walls and an open bottom bounded by the lower edges of the horizontal side walls and slot end walls is configured with suitable dimensions to receive a tab **86.**

In an embodiment, the sidewall **32** of the receptacle includes a tab **112** that extends horizontally across a portion of the receptacle sidewall **32,** downwards from the upper edge **114** and outward from the sidewall **32** of the receptacle sidewall **32.** The position of the receptacle tab **112** relative to the slot **19** is configured to provide sufficient clearance to span the width of the slot **19** and in operation allow the tab to be inserted within the slot **19** and removed from the slot **19.**

In an embodiment, the receptacle tab **112** includes a first receptacle tab portion **128** opposed to a second receptacle tab portion **130** each of which extend outwardly and downwardly from the tab **112.** The position of each tab portion relative to the slot **19** is configured to provide sufficient clearance to span the width of the slot **19** and in operation allow the tab to be removably inserted within the slot **19.**

In an embodiment, shown in **FIG. 5****,** the partition wall includes one or more partition slots spaced evenly across the partition wall. The partition slot **19** includes a first slot end wall **116** extending outwardly horizontally away from the partition wall **18** and terminating at an upper edge **118** and a lower edge **120.** An edge of the first slot end wall **116** is coupled to a horizontal side wall **122** which faces the partition wall **18** and extends horizontally across the partition wall **18** and terminates at an upper edge **118** and lower edge **120.** The partition slot sidewall coupled to a second slot end wall **124** extending outwardly and horizontally away from the partition wall **18** and terminating at an upper edge **126** and a lower edge **128.** A slot or opening formed within the slot end walls and horizontal side walls having an open top bounded by the top edges of the horizontal side walls and slot end walls and an open bottom bounded by the lower edges of the horizontal side walls and slot end walls is configured with suitable dimensions to receive a tab **112.**

In an embodiment, the partition slot **19** has one or more interior walls that extend outward from the partition wall **18.** The interior walls **130** (shown in **FIG. 7**) extend outward from the partition wall **18** relative to the horizontal side wall **122** to provide sufficient clearance of the tab **112** between the horizontal sidewall **122** and the interior wall. The interior walls **130** provide additional stability for the tab **112** when inserted within the partition slot **19.** In an embodiment the interior walls can be further configured relative to the tab such that the spacing between the interior walls and the sidewalls or adjacent interior walls form a channel (not shown) sufficient to receive the tab **112,** tab portion **128** and **130,** or both.

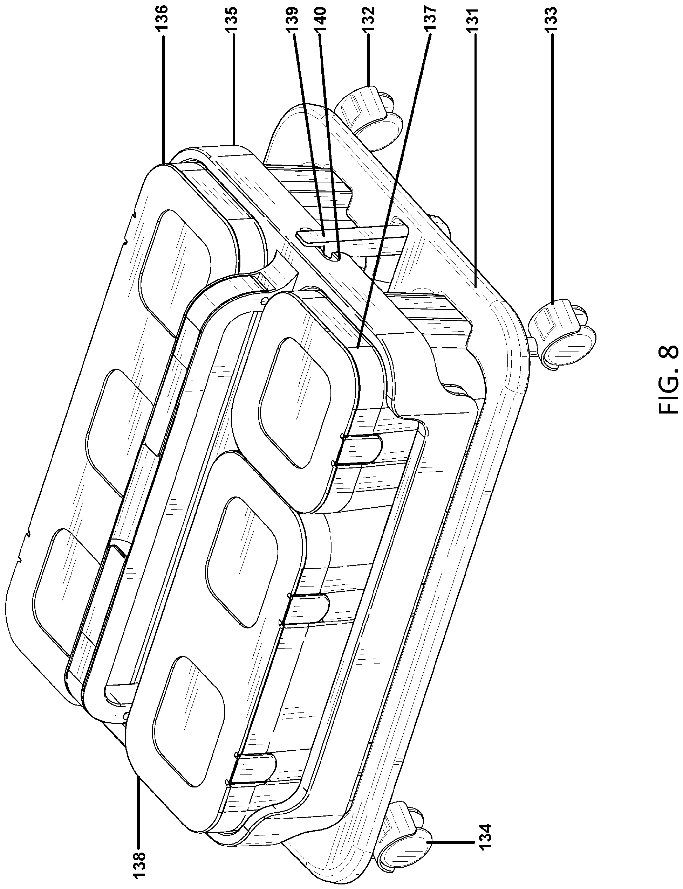

Also described herein is a customizable caddy assembly that includes a platform and a storage base configured to receive interchangeable storage receptacles. **FIG. 8** is a perspective view of a platform **131** according to an embodiment of the disclosure.

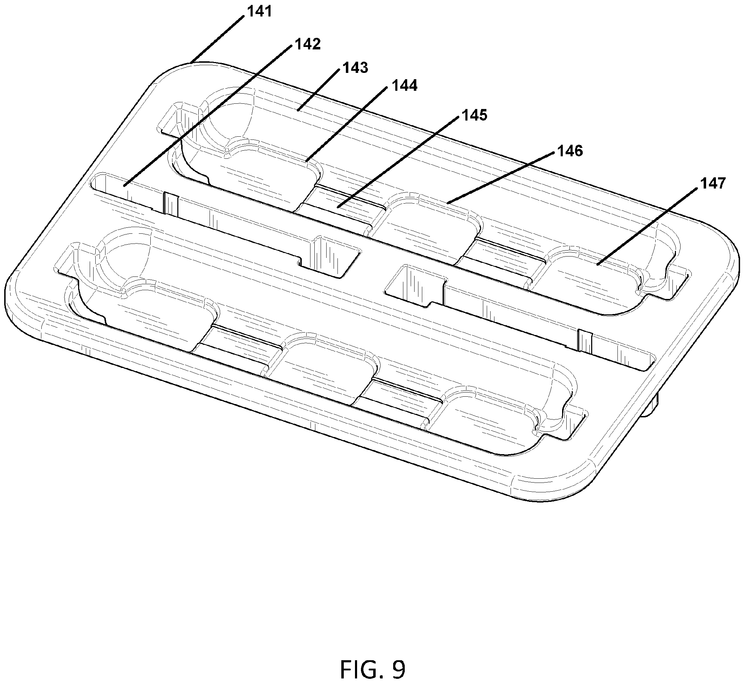

**FIG. 9** is a perspective view of the top of a platform **141** according to an embodiment of the disclosure. The bottom of platform **141** has a plurality of grooves and depressions to receive the frame of a storage base. For example, the platform has grooves **143** and **144** and depressions **142, 146,** and **147** to receive the frame of a storage base. In certain embodiments, grooves **143** and **144** and depressions **142, 145,** and **146** removable engage the frame of a storage base through a snap-fit or other insert-slot mechanisms. Certain depressions such as **146** and **147** are designed to also accommodate the planar bottom of the receptacles. The grooves and depressions in the platform can assume various shapes known to persons of ordinary skill in the art to receive the frame of the storage base and accommodate the bottoms of the receptacles.

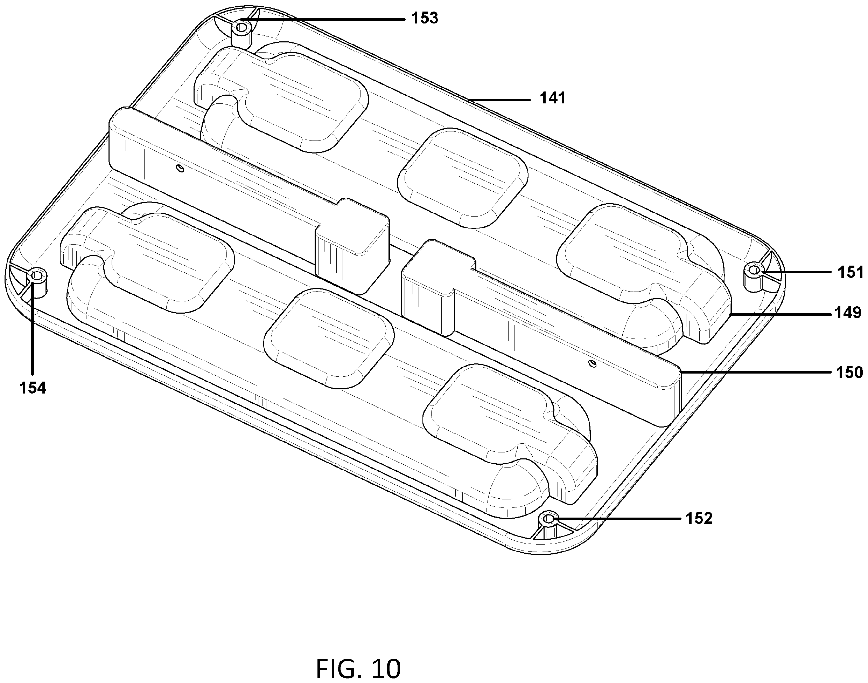

**FIG. 10** is a perspective view of the bottom of a platform **141** according to an embodiment of the disclosure. The molds **149** and **150** correspond to depressions **144** and **142,** as shown in **FIG. 9****,** which are configured to receive the frame of the storage base. The slots **151, 152, 153,** and **154** on the platform are configured to engage detachable moving mechanisms such as inserts with wheels. Each one of the slots **151, 152, 153,** and **154** can receive an insert with a wheel, such as **132, 133,** and **134** shown in **FIG. 8****.** These wheels can have locks to prevent the platform from rolling away. Other embodiments include a platform **141** with integrated wheels instead of the detachable wheels. These wheels can be of any suitable size, shape, color, profile, width, and hardness. The wheels may be secured to the platform by a variety of mechanisms, such as screwing the wheels to appropriate slots in the platform, mounting the wheels to the platform via a bolt and a lug nut, and mounting the integrated wheels to the platform utilizing a single common axle. In an embodiment, adjacent slots such as **151** and **152** can be fitted with inline-skate wheel mechanisms, where the inserts that fit into slots **151** and **152** have a line of small wheels that increase mobility of heavier container systems. Adjacent slots such as **153** and **154** can also be similar fitted in this embodiment.
While various embodiments of the present invention have been described, it will be apparent to those of skill in the art that many more embodiments and implementations are possible that are within the scope of the invention as defined by the claims.

## Claims

1. A device comprising:
a platform (131) defining a first well (143) and a second well (143) therein such that the first well opposes the second well;
a first tab (139) including a first proximal portion and a first distal portion, wherein the first proximal portion is pivotally coupled to the platform (131) between the first well (143) and the second well (143) such that the first tab pivots between a first lowered position and a first raised position between the first well and the second well, wherein the first distal portion includes a first hook; and
a second tab (139) including a second proximal portion and a second distal portion, wherein the second proximal portion is pivotally coupled to the platform between the first well and the second well such that the second tab pivots between a second lowered position and a second raised position between the first well (143) and the second well (143), wherein the second distal portion includes a second hook, **characterized in that** the first distal portion and the second distal portion are configured to move away from each other as the first proximal portion pivots from the first lowered position to the first raised position and the second tab (139) pivots from the second lowered position to the second raised position,
wherein the first distal portion and the second distal portion are configured to move toward each other as the first proximal portion pivots from the first raised position to the first lowered position and the second proximal portion pivots from the second raised position to the second lowered position.

2. A device according to 1, wherein the first tab (139) and the second tab (139) are co-aligned along a plane common thereto.

3. A device according to claim 1, wherein at least one of the first tab (139) or the second tab (139) includes a rectilinear portion extending between a respective proximal portion and a respective distal portion.

## Patentansprüche

1. Vorrichtung, Folgendes umfassend:
einen Unterbau (131), der in sich eine erste Wanne (143) und eine zweite Wanne (143) derart definiert, dass die erste Wanne der zweiten Wanne gegenüberliegt,
einen ersten Streifen (139), der einen ersten nahen Abschnitt und einen ersten entfernten Abschnitt beinhaltet, wobei der erste nahe Abschnitt zwischen der ersten Wanne (143) und der zweiten Wanne (143) derart schwenkbar mit dem Unterbau (131) gekoppelt ist, dass der erste Streifen zwischen einer ersten abgesenkten Position und einer ersten erhöhten Position zwischen der ersten Wanne und der zweiten Wanne schwenkbar ist, wobei der erste entfernte Abschnitt einen ersten Haken beinhaltet, und
einen zweiten Streifen (139), der einen zweiten nahen Abschnitt und einen zweiten entfernten Abschnitt beinhaltet, wobei der zweite nahe Abschnitt zwischen der ersten Wanne und der zweiten Wanne derart schwenkbar mit dem Unterbau gekoppelt ist, dass der zweite Streifen zwischen einer zweiten abgesenkten Position und einer zweiten erhöhten Position zwischen der ersten Wanne (143) und der zweiten Wanne (143) schwenkbar ist, wobei der zweite entfernte Abschnitt einen zweiten Haken beinhaltet,
**dadurch gekennzeichnet, dass**
der erste entfernte Abschnitt und der zweite entfernte Abschnitt dafür gestaltet sind, sich voneinander weg zu bewegen, wenn der erste nahe Abschnitt von der ersten abgesenkten Position in die erste erhöhte Position schwenkt und der zweite Streifen (139) von der zweiten abgesenkten Position in die zweite erhöhte Position schwenkt,
wobei der erste entfernte Abschnitt und der zweite entfernte Abschnitt dafür gestaltet sind, sich zueinander hin zu bewegen, wenn der erste nahe Abschnitt von der ersten erhöhten Position in die erste abgesenkte Position schwenkt und der zweite nahe Abschnitt von der zweiten erhöhten Position in die zweite abgesenkte Position schwenkt.

2. Vorrichtung nach Anspruch 1, wobei der erste Streifen (139) und der zweite Streifen (139) entlang einer gemeinsamen Ebene ausgerichtet sind.

3. Vorrichtung nach Anspruch 1, wobei der erste Streifen (139) und/oder der zweite Streifen (139) einen geradlinigen Abschnitt beinhalten, der sich zwischen einem entsprechenden nahen Abschnitt und einem entsprechenden entfernten Abschnitt erstreckt.

## Revendications

1. Dispositif comprenant :
une plateforme (131) dans laquelle sont délimités un premier puits (143) et un second puits (143) de telle sorte que le premier puits soit situé en face du second ;
une première languette (139) comprenant une première portion proximale et une première portion distale, dans laquelle la première portion proximale est couplée de manière pivotante à la plateforme (131) entre le premier puits (143) et le second puits (143) de telle sorte que la première languette pivote entre une première position abaissée et
une première position relevée entre le premier puits et le second puits,
la première portion distale comprenant un premier crochet ; et une seconde languette (139) comprenant une seconde portion proximale et une seconde portion distale, dans laquelle la seconde portion proximale est couplée de manière pivotante à la plateforme entre le premier puits et le second puits de telle sorte que la seconde languette pivote entre une seconde position abaissée et une seconde position relevée entre le premier puits (143) et le second puits (143),
la seconde portion distale comprenant un second crochet,
**caractérisé en ce que**
la première portion distale et la seconde portion distale sont conçues pour s'éloigner l'une de l'autre lorsque la première portion proximale pivote depuis la première position abaissée vers la première position relevée et que la seconde languette (139) pivote depuis la seconde position abaissée vers la seconde position relevée,
dans lequel la première portion distale et la seconde portion distale sont conçues pour se rapprocher l'une de l'autre lorsque la première portion proximale pivote depuis la première position relevée vers la première position abaissée et que la seconde portion proximale pivote depuis la seconde position relevée vers la seconde position abaissée.

2. Dispositif selon la revendication 1, dans lequel la première languette (139) et la seconde languette (139) sont co-alignées le long d'un plan qui leur est commun.

3. Dispositif selon la revendication 1, dans lequel au moins l'une parmi la première languette (139) et la seconde languette (139) comprend une portion rectiligne se prolongeant entre une portion proximale et une portion distale correspondantes.
